# EUROPEAN PATENT SPECIFICATION

(11) **EP 4 201 668 B1**
(45) Date of publication and mention of the grant of the patent: **14.10.2026**
(21) Application number: 21858102.3
(22) Date of filing: 20.07.2021
(51) Int. Cl.: C08J 5/18, B29D 30/06, B32B 23/04, C08L 23/0807, B32B 27/34, B60C 11/13, B60C 1/00, B29D 30/52, B60C 11/00, B32B 25/04, B32B 25/08, B32B 27/36, B32B 25/16, B32B 27/32, B32B 27/30, C08F 212/08

(54) **FILM, LAMINATE BODY, FILM PRODUCTION METHOD, TIRE AND TIRE PRODUCTION METHOD**
FOLIE, LAMINATKÖRPER, FOLIENHERSTELLUNGSVERFAHREN, REIFEN UND REIFENHERSTELLUNGSVERFAHREN
FILM, CORPS STRATIFIÉ, PROCÉDÉ DE PRODUCTION DE FILM, PNEU ET PROCÉDÉ DE PRODUCTION DE PNEU

(30) Priority: 20.08.2020 JP 2020139629; 20.08.2020 JP 2020139627; 20.08.2020 JP 2020139628
(43) Date of publication of application: 28.06.2023
(73) Proprietor: BRIDGESTONE CORPORATION, Chuo-ku Tokyo 104-8340 (JP)
(72) Inventor: OZAKI Takuya, Tokyo 104-8340 (JP); SUGI Shinichiro, Tokyo 104-8340 (JP); HOJO Masahiro, Tokyo 104-8340 (JP)
(74) Representative: Marks & Clerk LLP
(86) International application number: PCT/JP2021/027230
(87) International publication number: WO 2022/038953

(56) References cited:
- WO-A1-2013/168676
- WO-A1-2015/190072
- WO-A1-2017/065300
- WO-A1-2017/065304
- JP-A- 2010 243 820
- JP-A- 2014 234 126
- JP-A- 2016 088 093

## Description

### TECHNICAL FIELD

This disclosure relates to a film, a laminated body, a method of producing a film, a tire, and a method of producing a tire.

### BACKGROUND

Various shaped products have been conventionally produced using olefin-based resins with excellent impact resistance.

For example, JP 2012-246366 A (PTL 1) describes that a resin composition containing a polypropylene resin and two types of hydrogenated styrene/butadiene/styrene copolymer elastomers in predetermined proportions has both impact resistance and scratch resistance, which can be suitably used as an unpainted resin shaping material.

As another example, WO 2017/065300 (PTL 2) describes that a product having excellent impact resistance and high transparency can be obtained using a composition containing a multi-component copolymer having a conjugated diene unit, a non-conjugated olefin unit, and an aromatic vinyl unit, and having a proportion of the aromatic vinyl unit of 50 mol% or more of the total.
PTL 3 relates to a rubber sheet having a thickness of 500 µm or less, wherein a rubber component in a rubber composition to constitute the rubber sheet contains a liquid elastomer having a weight-average molecular weight of from 500 to 100000.
PTL 4 relates to a method of forming a dynamically vulcanized thermoplastic elastomer film, and to films formed therefrom.

### CITATION LIST

### Patent Literature

PTL 1: JP 2012-246366 A
PTL 2: WO 2017/065300
PTL 3: WO 2013/168676
PTL 4: JP 2016-088093 A

### SUMMARY

### (Technical Problem)

However, there is a demand in various industrial fields for a thin film that can offer durability such as impact resistance like that of olefin-based resins. Such a film is expected to be applied to various applications.

On the other hand, the composition described in PTL 1 is mainly used to produce automobile interior parts such as instrument panel garnish, which are required to be unpainted. Further, the composition described in PTL 2 can be used to produce containers, trays, and the like. That is, neither of the techniques in PTL 1 and 2 is intended to be applied to thin films, and there is a high possibility that thinning cannot be achieved with these techniques.

From the viewpoint of handleability during storage and use, it is important for films that they should not easily adhere to each other or to other articles (should be easy to peel off) unless there are special requirements.

It could thus be helpful to provide a thin film with good durability that is easy to handle during storage and use.

Further, it could be helpful to provide a laminated body with good durability using the film described above.

Further, it could be helpful to provide a method of producing a film with which the film described above can be produced.

Further, it could be helpful to provide a tire with good durability using the film described above.

Further, it could be helpful to provide a method of producing a tire with which the tire described above can be easily produced.

### (Solution to Problem)

We thus provide the following.

A film of this disclosure being a rubber film contains, as a rubber component, at least a copolymer having a conjugated diene unit, a non-conjugated olefin unit, and an aromatic vinyl unit, and having a proportion of a butylene unit of 0 mol%, wherein
the copolymer has a proportion of the conjugated diene unit of 5 mol% to 70 mol%, a proportion of the non-conjugated olefin unit of 25 mol% to 94 mol%, and a proportion of the aromatic vinyl unit of 1 mol% to 30 mol% ,
a proportion of the copolymer in the rubber component is 50 % by mass or more,
a filler content is 15 parts by mass or less with respect to 100 parts by mass of the rubber component,
no cross-linking agent is contained, and
the thickness is 300 µm or less.

In a first laminated body of this disclosure, the film described above, and a rubber layer in which a proportion of a diene-based rubber in a rubber component is 50 % by mass or more are laminated.

In a second laminated body of this disclosure, the film described above, and a resin layer in which a proportion of a resin component to the total of a rubber component and a resin component is 50 % by mass or more are laminated.

A method of producing a film of this disclosure is a method of producing the film described above, where the copolymer described above alone or a rubber composition containing at least the copolymer described above is melted and formed into a film by melt extrusion molding.

A first tire of this disclosure is a tire having grooves in a tread portion, where
the film described above is arranged on at least part of the surface of the groove bottom and groove wall of the groove.

A method of producing a first tire of this disclosure is a method of producing the first tire described above, including
a tread preparation process of preparing a raw tire in which the film described above is arranged on at least part of the surface of unvulcanized tread rubber, and
a tread vulcanization process of vulcanizing the raw tire described above using a vulcanization mold and forming grooves in a tread portion.

In a second tire of this disclosure, the film described above is arranged on at least part of the surface of a sidewall portion.

A method of producing a second tire of this disclosure is a method of producing the second tire described above, including
a side preparation process of preparing a raw tire in which the film described above is arranged on at least part of the surface of unvulcanized side rubber, and
a side vulcanization process of vulcanizing the raw tire described above using a vulcanization mold.

### (Advantageous Effect)

According to this disclosure, it is possible to provide a thin film with good durability that is easy to handle during storage and use.

Further, according to this disclosure, it is possible to provide a laminated body with good durability using the film described above.

Further, according to this disclosure, it is possible to provide a method of producing a film with which the film described above can be produced.

Further, according to this disclosure, it is possible to provide a tire with good durability using the film described above.

Further, according to this disclosure, it is possible to provide a method of producing a tire with which the tire described above can be easily produced.

### DETAILED DESCRIPTION

The following describes a film and a method of producing the film, a laminated body, and a tire and a method of producing the tire of this disclosure in detail based on embodiments.

### (Film)

A film of one embodiment of this disclosure (hereinafter may be referred to as "film of this embodiment") contains, as a rubber component, at least a copolymer (hereinafter may be referred to as "copolymer A") having a conjugated diene unit, a non-conjugated olefin unit, and an aromatic vinyl unit, and having a proportion of a butylene unit of 0 mol%, where a filler content is 15 parts by mass or less with respect to 100 parts by mass of the rubber component, no cross-linking agent is contained, and the thickness is 300 µm or less.

We have succeeded in reducing the thickness (making the material into a film) by using the copolymer A having a predetermined monomer composition and by optimizing the amounts of other materials blended. The film thus obtained is less likely to adhere to each other or to other articles and therefore offers excellent handleability.

Further, we have surprisingly found that, when the thickness of the film (rubber film) prepared using the above-described copolymer A is 300 µm or less, it can offer better durability than a thicker film. Moreover, the film of this embodiment is as thin as 300 µm or less in thickness, so that an increase in weight can be significantly suppressed even if it is attached to another member.

The film of this embodiment can repair itself when it is heated at a temperature equal to or higher than its melting point, which is one of its advantages.

As described above, the film of this embodiment is required to have a thickness of 300 µm or less. When the thickness of the film exceeds 300 µm, the durability may be not good enough. The thickness of the film is preferably 200 µm or less, more preferably 150 µm or less, still more preferably 120 µm or less, and particularly preferably 100 µm or less. Even though the film of this embodiment is extremely thin, it can offer good durability. Further, the thickness of the film is preferably 10 µm or more and more preferably 30 µm or more, from the viewpoint of production feasibility and the viewpoint of more reliably improving the durability.

When the proportion of the copolymer A in the rubber component used as a material is too small (for example, 30 % by mass or less), there is a high probability that the thin film with a thickness of 300 µm or less cannot be prepared, or that the preparation will be extremely difficult.

### <Copolymer A>

The film is required to contain, as a rubber component, a copolymer having a conjugated diene unit, a non-conjugated olefin unit, and an aromatic vinyl unit, and having a proportion of a butylene unit of 0 mol%, which is the copolymer A. The film can be prepared with the copolymer A alone, or it can be prepared with a rubber composition containing at least the copolymer A. The copolymer A may be used alone or in combination of two or more.

The conjugated diene unit is a monomer unit derived from a conjugated diene compound. The conjugated diene unit enables cross-linking (vulcanization) of the copolymer and can offer elongation and strength as rubber. As used herein, the conjugated diene compound refers to a diene compound in a conjugated system. The conjugated diene compound as a monomer of the copolymer A preferably has 4 to 8 carbon atoms. Specific examples of such a conjugated diene compound include 1,3-butadiene, isoprene, 1,3-pentadiene, and 2,3-dimethyl-1,3-butadiene. The conjugated diene compound may be used alone or in combination of two or more. The conjugated diene compound as a monomer of the copolymer A preferably contains 1,3-butadiene and/or isoprene, it more preferably consists only of 1,3-butadiene and/or isoprene, and it still more preferably consists only of 1,3-butadiene, from the viewpoint of effectively improving the durability, including the crack resistance, of the film. In other words, the conjugated diene unit in the copolymer A preferably contains a 1,3-butadiene unit and/or an isoprene unit, it more preferably consists only of a 1,3-butadiene unit and/or an isoprene unit, and it still more preferably consists only of a 1,3-butadiene unit.

The proportion of the conjugated diene unit in the copolymer A is 5 mol% or more. It is 70 mol% or less. When the proportion of the conjugated diene unit in the copolymer A is 5 mol% or more, the film has excellent elongation, and the durability can be further improved. When the proportion of the conjugated diene unit in the copolymer A is 70 mol% or less, the weather resistance can be improved. From the same point of view, the proportion of the conjugated diene unit in the copolymer A is more preferably 8 mol% or more. It is more preferably 60 mol% or less, still more preferably 55 mol% or less, further preferably 50 mol% or less, even more preferably 45 mol% or less, and particularly preferably 40 mol% or less.

The non-conjugated olefin unit is a monomer unit derived from a non-conjugated olefin compound. Having the non-conjugated olefin unit in the copolymer can provide crystallinity. As used herein, the non-conjugated olefin compound refers to a compound which is unsaturated aliphatic hydrocarbon and has at least one carbon-carbon double bond. The non-conjugated olefin compound as a monomer of the copolymer A preferably has 2 to 10 carbon atoms. Specific examples of such a non-conjugated olefin compound include α-olefin such as ethylene, propylene, 1-butene, 1-pentene, 1-hexene, 1-heptene, and 1-octene, and heteroatom-substituted alkene compounds such as vinyl pivalate, 1-phenylthioethene, and N-vinylpyrrolidone. The non-conjugated olefin compound may be used alone or in combination of two or more. The non-conjugated olefin compound as a monomer of the copolymer A is preferably an acyclic non-conjugated olefin compound, more preferably α-olefin, and still more preferably α-olefin containing ethylene, and it further preferably consists only of ethylene, from the viewpoint of improving the weather resistance of the film. In other words, the non-conjugated olefin unit in the copolymer A is preferably an acyclic non-conjugated olefin unit, more preferably an α-olefin unit, and still more preferably an α-olefin unit containing an ethylene unit, and it further preferably consists only of an ethylene unit.

The proportion of the non-conjugated olefin unit in the copolymer A is 25 mol% or more. It is 94 mol% or less. When the proportion of the non-conjugated olefin unit in the copolymer A is 25 mol% or more, the proportion of the conjugated diene unit or the aromatic vinyl unit decreases as a result, and the weather resistance and the breaking resistance (especially the tensile strength at break (TB)) can be further improved. When the proportion of the non-conjugated olefin unit in the copolymer A is 94 mol% or less, the proportion of the conjugated diene unit or the aromatic vinyl unit increases as a result, and the breaking resistance at high temperatures (especially the elongation at break (EB)) can be improved. From the same point of view, the proportion of the non-conjugated olefin unit in the copolymer A is more preferably 30 mol% or more, still more preferably 40 mol% or more, and further preferably 50 mol% or more. Further, it is more preferably 90 mol% or less, still more preferably 88 mol% or less, and particularly preferably 85 mol% or less.

The proportion of the butylene unit in the copolymer A is 0 mol% (having no butylene unit). That is, the copolymer A does not contain a hydrogenated product of styrene-butadiene copolymer, such as styrene-ethylene/butylene-styrene (SEBS).

The aromatic vinyl unit is a monomer unit derived from an aromatic vinyl compound. Having the aromatic vinyl unit in the copolymer can improve the breaking resistance of the copolymer itself and thus the breaking resistance of the film. As used herein, the aromatic vinyl compound refers to an aromatic compound substituted with at least a vinyl group, which is not included in the conjugated diene compound. The aromatic vinyl compound as a monomer of the copolymer A preferably has 8 to 10 carbon atoms. Specific examples of such an aromatic vinyl compound include styrene, o-methylstyrene, m-methylstyrene, p-methylstyrene, o,p-dimethylstyrene, o-ethylstyrene, m-ethylstyrene, and p-ethylstyrene. The aromatic vinyl compound may be used alone or in combination of two or more. From the viewpoint of improving the weather resistance of the film, the aromatic vinyl compound as a monomer of the copolymer A preferably contains styrene and more preferably consists only of styrene. In other words, the aromatic vinyl unit in the copolymer A preferably contains a styrene unit and more preferably consists only of a styrene unit.

The aromatic ring in the aromatic vinyl unit is not included in the main chain of the copolymer unless it is bonded to an adjacent unit.

The proportion of the aromatic vinyl unit in the copolymer A is 1 mol% or more. It is 30 mol% or less. When the proportion of the aromatic vinyl unit in the copolymer A is 1 mol% or more, the breaking resistance at high temperatures can be improved. When the proportion of the aromatic vinyl unit in the copolymer A is 30 mol% or less, the effect of the conjugated diene unit and the non-conjugated olefin unit becomes remarkable. From the same point of view, the proportion of the aromatic vinyl unit in the copolymer A is more preferably 2 mol% or more. It is more preferably 20 mol% or less, still more preferably 15 mol% or less, and further preferably 10 mol% or less.

In the copolymer A, the proportion of the conjugated diene unit is preferably 5 mol% to 70 mol%, the proportion of the non-conjugated olefin unit is preferably 25 mol% to 94 mol%, and the proportion of the aromatic vinyl unit is preferably 1 mol% to 30 mol%. In this case, the durability, including the crack resistance, of the film can be further improved, and the weather resistance of the film can also be improved.

The copolymer A may have monomer units other than the conjugated diene unit, the non-conjugated olefin unit, and the aromatic vinyl unit. However, from the viewpoint of obtaining the desired effect, the proportion of the other monomer units is preferably 20 mol% or less, more preferably 10 mol% or less, still more preferably 50 mol% or less, and particularly preferably 0 mol% of the entire copolymer A.

The main chain of the copolymer A preferably consists only of an acyclic structure. This can further improve the durability, including the crack resistance, of the film.

Confirmation of whether or not the main chain of the copolymer has a cyclic structure is mainly performed by means of NMR. Specifically, when a peak derived from a cyclic structure in the main chain (for example, a peak appearing at 10 ppm to 24 ppm for three- to five-membered rings) is not observed, the main chain of the copolymer consists only of an acyclic structure.

The copolymer A preferably has a melting point of 30 °C to 130 °C as measured by a differential scanning calorimeter (DSC). When the melting point of the copolymer is 30 °C or higher, the crystallinity of the copolymer is high, and the durability of the film can be further improved. When the melting point of the copolymer A is 130 °C or lower, the operability of the film and the rubber composition used for preparing the film is further improved. From the same point of view, the melting point of the copolymer A is more preferably 40 °C or higher. It is more preferably 125 °C or lower, still more preferably 120 °C or lower, and particularly preferably 110 °C or lower.

The copolymer A preferably has a polystyrene-equivalent weight-average molecular weight (Mw) of 50,000 to 2,000,000. When the Mw of the copolymer A is 50,000 or more, the mechanical strength of the film can be sufficiently secured. When it is 2,000,000 or less, good operability can be maintained. From the same point of view, the Mw of the copolymer A is more preferably 100,000 or more and still more preferably 150,000 or more. It is more preferably 1,000,000 or less and still more preferably 800,000 or less.

The copolymer A preferably has a polystyrene-equivalent number-average molecular weight (Mn) of 50,000 to 2,000,000. When the Mn of the copolymer A is 50,000 or more, the mechanical strength of the film can be sufficiently secured. When it is 2,000,000 or less, good operability can be maintained. From the same point of view, the Mn of the copolymer A is more preferably 100,000 or more and still more preferably 120,000 or more. It is more preferably 1,000,000 or less, still more preferably 500,000 or less, and particularly preferably 300,000 or less.

The copolymer A preferably has a molecular weight distribution [Mw/Mn (weight-average molecular weight/number-average molecular weight)] of 1.00 to 4.00. When the molecular weight distribution of the copolymer A is 4.00 or less, the copolymer A can obtain sufficient homogeneity in its physical properties. From the same point of view, the molecular weight distribution of the copolymer A is more preferably 3.50 or less and still more preferably 3.00 or less. Further, the molecular weight distribution of the copolymer A is more preferably 1.50 or more and still more preferably 1.80 or more.

The weight-average molecular weight (Mw), number-average molecular weight (Mn), and molecular weight distribution (Mw/Mn) described above are determined by gel permeation chromatography (GPC) using polystyrene as a standard substance.

The copolymer A preferably has a degree of crystallinity of 0.5 % to 50 %. When the degree of crystallinity of the copolymer A is 0.5 % or more, the crystallinity due to the non-conjugated olefin unit is sufficiently ensured, and the durability, including the crack resistance, of the film can be further improved. When the degree of crystallinity of the copolymer A is 50 % or less, the operability during kneading is improved when producing the film. From the same point of view, the degree of crystallinity of the copolymer A is more preferably 3 % or more and still more preferably 5 % or more. It is more preferably 45 % or less.

The degree of crystallinity can be measured with the method described in the Examples section.

Specific examples of the copolymer A include a terpolymer having a conjugated diene unit, a non-conjugated olefin unit, and an aromatic vinyl unit. For example, the terpolymer and a method of producing the same described in WO 2015/190072 can be used.

### <Various components other than copolymer A>

The film (and the rubber composition used for its preparation) may contain a rubber component other than the copolymer A. Examples of the rubber component include natural rubber (NR), isoprene rubber (IR), butadiene rubber (BR), styrene-butadiene rubber (SBR), acrylonitrile-butadiene rubber (NBR), chloroprene rubber (CR), ethylene-propylene rubber (EPM), ethylene-propylene-diene rubber (EPDM), polysulfide rubber, silicone rubber, fluororubber, and urethane rubber. These rubber components may be used alone or in combination of two or more.

In the film (and the rubber composition used for its preparation), the proportion of the copolymer A in the rubber component is 50 % by mass or more. When the proportion of the copolymer A in the rubber component is 50 % by mass or more, a thin film with a thickness of 300 µm or less can be more reliably prepared, and the surface of the prepared film can be smoother. As a result, the durability, including the crack resistance, can be further improved. From the same point of view, the proportion of the copolymer A in the rubber component of the film is more preferably 65 % by mass or more, still more preferably 80 % by mass or more, and may be 100 % by mass.

The film (and the rubber composition used for its preparation) may further contain a resin component. Especially when the film is to be attached to a member of a resin composition (resin member), the film (and the rubber composition used for its preparation) preferably contains the same resin component as that contained in the resin composition. This can further improve the adhesiveness between the film and the resin member.

Examples of the resin component include cellulose-based resin (such as rayon-based resin), polyamide-based resin (such as nylon-based resin and aramid-based resin), acrylic-based resin (such as polymethyl methacrylate), polyester-based resin, polyolefin-based resin, polyvinyl alcohol-based resin, and silica-based resin. These resin components may be used alone or in combination of two or more. Examples of the polyolefin-based resin include polyethylene resin, polypropylene resin, and ethylene propylene resin. The polyethylene resin may be low-density polyethylene or high-density polyethylene.

The content of the resin component in the film (and the rubber composition used for its preparation) is preferably 100 parts by mass or less with respect to 100 parts by mass of the rubber component. When the content of the resin component is increased, the adhesiveness to the resin member can be improved, and high robustness against temperature can be obtained. When the content is 100 parts by mass or less, the thickness of the film can be more reliably reduced, and the durability can be more reliably improved.

The film (and the rubber composition used for its preparation) may contain various compounding agents in addition to the rubber component and the resin component. Examples of the compounding agent include filler, an age resistor, a softener, a colorant, an organic or inorganic pigment, a flame retardant, an antistatic agent, an electrical conducting material, an UV absorber, a lubricant, an antibacterial agent, a plasticizer, and a compatibilizing agent.

The film (and the rubber composition used for its preparation) is required to contain no cross-linking agent (e.g., a sulfur-based cross-linking agent such as sulfur, an organic peroxide-based cross-linking agent, an inorganic cross-linking agent, a polyamine cross-linking agent, a resin cross-linking agent, and an oxime-nitrosamine-based cross-linking agent). If a cross-linking agent is contained, rubber scorching may occur during the preparation of the film, and the desired film may not be obtained. Further, because no cross-linking agent is used, a process of blending a cross-linking agent can be advantageous omitted when preparing the film.

Examples of the filler include carbon black, silica, aluminum hydroxide, clay, alumina, talc, mica, kaolin, glass balloons, glass beads, calcium carbonate, magnesium carbonate, magnesium hydroxide, magnesium oxide, titanium oxide, potassium titanate, and barium sulfate.

The content of the filler in the film (and the rubber composition used for its preparation) is required to be 15 parts by mass or less with respect to 100 parts by mass of the rubber component. When the content of the filler exceeds 15 parts by mass, a thin film with a thickness of 300 µm or less may not be prepared. From the viewpoint of more easily and reliably preparing the desired thin film, the content of the filler in the film (and the rubber composition used for its preparation) is preferably 10 parts by mass or less and more preferably 5 parts by mass or less, and the film still more preferably contains no filler.

Examples of the age resistor include an amine-ketone-based compound, an imidazole-based compound, an amine-based compound, a phenol-based compound, a sulfur-based compound, and a phosphorus-based compound. The film (and the rubber composition used for its preparation) particularly preferably contains, as an age resistor, a compound having two or more phenyl groups with a branched alkyl group. By using a compound having two or more phenyl groups with a branched alkyl group as an age resistor, the dispersibility of the copolymer A can be improved, and gelation of the copolymer A can be suppressed when performing kneading at a high temperature during the film production. Further, by using a compound having two or more phenyl groups with a branched alkyl group as an age resistor, the handleability of the film can be further improved. The compound having two or more phenyl groups with a branched alkyl group may be used alone or in combination of two or more.

More specifically, the compound having two or more phenyl groups with a branched alkyl group is preferably a compound having a structure represented by the following formula (1) or formula (2).

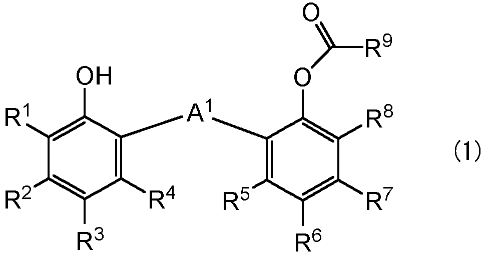

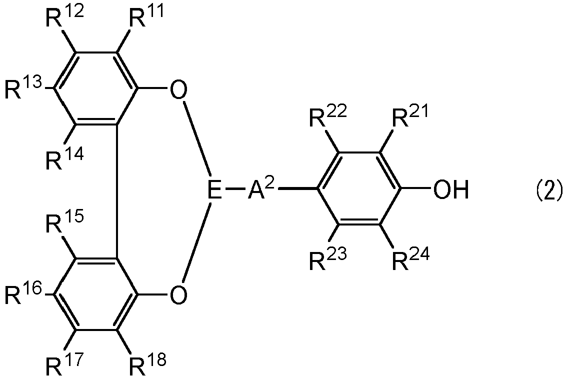

In the formulas (1) and (2), R¹ to R⁸, R¹¹ to R¹⁸, and R²¹ to R²⁴ are a hydrogen atom, a linear alkyl group, a cyclic alkyl group, or a branched alkyl group, and at least one of R¹ to R⁸; and at least one of R¹¹ to R¹⁸ and R²¹ to R²⁴ is a branched alkyl group. R¹ to R⁸, R¹¹ to R¹⁸, and R²¹ to R²⁴ may be the same or different. R⁹ is a hydrocarbon group. A¹ and A² are linking groups. E is a trivalent heteroatom.

The linear alkyl group preferably has 1 to 12 carbon atoms, more preferably 1 to 8 carbon atoms, still more preferably 1 to 5 carbon atoms, and further preferably 1 to 3 carbon atoms. Specific examples of the linear alkyl group include a methyl group, an ethyl group, a n-propyl group, a n-butyl group, a n-pentyl group, a n-hexyl group, a n-heptyl group, a n-octyl group, a n-nonyl group, a n-decyl group, and a n-dodecyl group. The linear alkyl group may further have a substituent such as a halogen atom.

Among the above, the linear alkyl group is preferably an unsubstituted linear alkyl group, and it is more preferably a methyl group, an ethyl group, or a n-propyl group.

The cyclic alkyl group preferably has 5 to 12 carbon atoms, more preferably 6 to 12 carbon atoms, and still more preferably 6 to 8 carbon atoms. Specific examples of the cyclic alkyl group include a cyclopentyl group, a cyclohexyl group, and a cyclooctyl group. The cyclic alkyl group may further have a substituent such as an alkyl group having 1 to 3 carbon atoms or a halogen atom.

Among the above, the cyclic alkyl group is preferably an unsubstituted cyclic alkyl group and more preferably a cyclohexyl group.

The branched alkyl group preferably has 3 to 12 carbon atoms, more preferably 3 to 8 carbon atoms, still more preferably 4 to 8 carbon atoms, and further preferably 4 to 6 carbon atoms. Specific examples of the branched alkyl group include an isopropyl group, a 2-butyl group, a tert-butyl group, a tert-pentyl group, a 2-hexyl group, a 2-heptyl group, a 2-octyl group, and a 2-dodecyl group. The branched alkyl group may further have a substituent such as a halogen atom.

Among the above, the branched alkyl group is preferably an unsubstituted branched alkyl group, more preferably an isopropyl group, a 2-butyl group, a tert-butyl group, or a tert-pentyl group, and still more preferably a tert-butyl group, or a tert-pentyl group.

Examples of the hydrocarbon group represented by R⁹ include an alkyl group, an alkenyl group, and an alkynyl group. Examples of the alkyl group include the linear alkyl group, cyclic alkyl group, and branched alkyl group exemplified above, where the preferred ranges are also the same. The alkenyl group and the alkynyl group preferably have 2 to 8 carbon atoms, such as a vinyl group.

Examples of the linking group represented by A¹ and A² include a divalent hydrocarbon group having 1 to 6 carbon atoms, which may contain a divalent or higher heteroatom (such as an oxygen atom and a sulfur atom). The hydrocarbon in the hydrocarbon group may be saturated hydrocarbon or unsaturated hydrocarbon. Among the above, the linking group is preferably a saturated hydrocarbon group, and the linking group preferably has 1 to 5 carbon atoms and more preferably 1 to 4 carbon atoms. The linking group may further have a substituent such as a halogen atom, a methyl group, or an ethyl group.

Examples of the trivalent heteroatom represented by E include a sulfur atom and a phosphorus atom, among which a phosphorus atom is preferable.

In the formula (1), at least one of R¹ to R⁴ and at least one of R⁵ to R⁸ are each preferably a branched alkyl group. Further, in the formula (2), at least two selected from the group consisting of a group Ra selected from R¹¹ to R¹⁴; a group Rb selected from R¹⁵ to R¹⁸; and a group Rc selected from R²¹ to R²⁴ are preferably branched alkyl groups.

The phenyl group having a branched alkyl group (a phenyl group with a branched alkyl group) preferably has a plurality of branched alkyl groups. Among the above, in the formulas (1) and (2), at least two of R¹ to R⁴; at least two of R⁵ to R⁸; at least two of R¹¹ to R¹⁴; and at least two of R¹⁵ to R¹⁸ are preferably branched alkyl groups.

The compound having the structure represented by the formula (1) is preferably as follows:
R¹ and R⁸ are branched alkyl groups; R², R⁴, R⁵ and R⁷ are hydrogen atoms; R³ and R⁶ are branched alkyl groups or linear alkyl groups; R⁹ is an unsaturated hydrocarbon group; and A¹ is a divalent saturated hydrocarbon group.

The compound having the structure represented by the formula (1) is more preferably as follows:
R¹ and R⁸ are unsubstituted branched alkyl groups having 3 to 6 carbon atoms; R², R⁴, R⁵ and R⁷ are hydrogen atoms; R³ and R⁶ are unsubstituted branched alkyl groups having 4 to 5 carbon atoms or unsubstituted linear alkyl groups having 1 to 3 carbon atoms; R⁹ is an unsubstituted vinyl group; A¹ is an alkyl group-substituted or unsubstituted methylene group.

The compound having the structure represented by the formula (1) is more preferably a compound having a structure represented by the following formula (3) or (4).

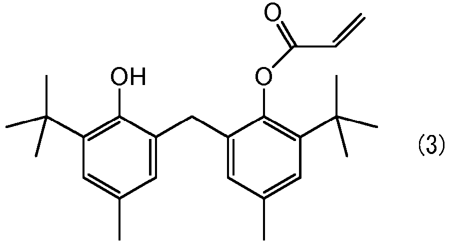

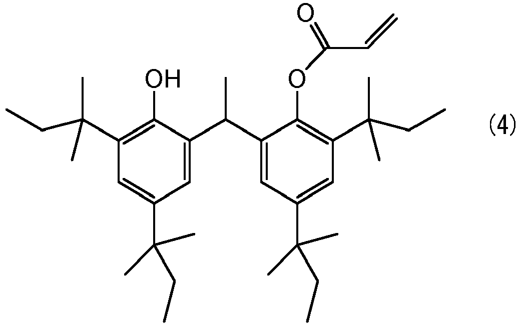

The structure represented by the formula (2) is preferably as follows:
R¹¹, R¹³, R¹⁶, R¹⁸ and R²¹ are branched alkyl groups; R¹², R¹⁴, R¹⁵, R¹⁷, R²² and R²³ are hydrogen atoms; R²⁴ is a linear alkyl group; A² is a divalent saturated hydrocarbon group containing an oxygen atom; and E is a sulfur atom or a phosphorus atom.

The structure represented by the formula (2) is more preferably as follows:
R¹¹, R¹³, R¹⁶, R¹⁸ and R²¹ are unsubstituted branched alkyl groups having 3 to 5 carbon atoms; R¹², R¹⁴, R¹⁵, R¹⁷, R²² and R²³ are hydrogen atoms; R²⁴ is an unsubstituted linear alkyl group having 1 to 3 carbon atoms; A² is an unsubstituted alkyleneoxy group having 2 to 5 carbon atoms (in -OR-, R is unsubstituted alkylene having 2 to 5 carbon atoms); and E is a phosphorus atom.

The compound having the structure represented by the formula (2) is more preferably a compound having the structure represented by the following formula (5).

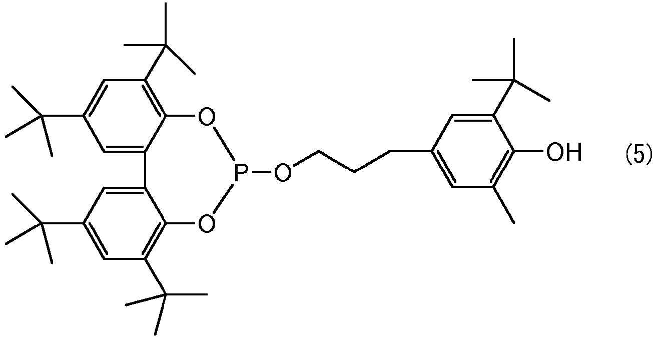

Among the above, the compound having two or more phenyl groups with a branched alkyl group is particularly preferably a compound having a structure represented by the formula (4) or (5).

The content of the age resistor in the film (and the rubber composition used for its preparation) is preferably 0.1 parts by mass or more and 5 parts by mass or less with respect to 100 parts by mass of the rubber component. When the content of the age resistor is 0.1 parts by mass or more, the effect of improving the dispersibility of the copolymer A and suppressing gelation can be sufficiently obtained. When the content is 5 parts by mass or less, the durability, including the crack resistance, of the film can be maintained satisfactorily. From the same point of view, the content of the age resistor in the film (and the rubber composition used for its preparation) is more preferably 0.5 parts by mass or more. It is more preferably 3 parts by mass or less.

### <Preparation of film>

As described above, the film of this embodiment can be prepared with the copolymer A alone or with a rubber composition containing at least the copolymer A. The rubber composition can be prepared by kneading using a kneader such as a Banbury mixer, a roll, or an internal mixer. A method of forming the above-described film with a thickness of 300 µm or less is not particularly limited, and examples thereof include melt extrusion molding, injection molding, inflation molding, blow molding, and compression molding. Especially from the viewpoint of continuously forming films of stable quality, melt extrusion molding and injection molding are preferable, and melt extrusion molding is more preferable.

### <Application of film>

The film of this embodiment can be used as an adhesive film because the material has been optimized.

For example, the film of this embodiment can be suitably used for adhering members (rubber members) of a rubber composition containing a diene-based rubber to each other. In this case, the adhesion can be achieved by arranging the film between two unvulcanized rubber members, where the film is in contact with the rubber members, and performing vulcanization. It is considered that the achievement of adhesion is due to the co-crosslinking between the film and the rubber members.

For another example, the film of this embodiment can be suitably used for adhering members (resin members) of a resin composition containing a resin component to each other. In this case, the adhesion can be achieved by arranging the film between two resin members, where the film is in contact with the resin members, and heating the film and the resin members. It is considered that the achievement of adhesion is due to the melting of the crystalline portion of the film (and the resin members).

For further application, the film of this embodiment can be used to adhere a member (rubber member) of a rubber composition containing a diene-based rubber and a member (resin member) of a resin composition containing a resin component, for example. Specific operations and actions in this case are the same as described above.

As described above, the film of this embodiment is thin and has good durability and excellent handleability, so that it can be used for various purposes. For example, the film of this embodiment can be appropriately laminated on the surface of a sidewall portion or a tread portion of a tire to improve the performance, and it can also be used to prepare an inner liner of a tire. Further, the film of this embodiment can be widely used for rubber products such as seismic isolation rubber, anti-vibration rubber, rubber packing, rubber mat, rubber gloves, and rubber shoes, in addition to tire applications.

Recently, there is a passive radio frequency identification transponder (hereinafter may be referred to as "transponder") as a noncontact information recording and reproducing device capable of writing or reading information using radio waves. By attaching a transponder to a tire and writing information about the tire to the transponder or reading information from the transponder, a tire-managing system is constructed. Examples of the transponder include a RFID tag. The film of this embodiment can also be used as an adhesion layer when arranging an electronic component such as a transponder on a tire.

### (Method of producing film)

A method of producing a film according to one embodiment of this disclosure (hereinafter may be referred to as "production method of this embodiment") includes melting the copolymer A alone or a rubber composition containing at least the copolymer A and forming the copolymer A alone or the rubber composition containing at least the copolymer A into a film by melt extrusion molding. The film described above can be produced with the production method of this embodiment.

The rubber composition can be prepared by kneading using a kneader such as a Banbury mixer, a roll, or an internal mixer. Further, it is preferable that each component to be blended in the preparation of the rubber composition should be blended in the amount listed as the content of each component in the film. In a case of using a rubber composition, it is preferable to appropriately adjust the conditions such as the composition of monomers in the copolymer A, the proportion of the copolymer A in the rubber component, the amount of filler to be blended, and the amount of cross-linking agent to be blended, to enable the preparation of a thin film with a thickness of 300 µm or less.

In the melt extrusion molding, the copolymer A alone or a rubber composition containing at least the copolymer A is heated, melted, and supplied to a die such as a T-die through a gear pump or a filter, for example. Next, the melt supplied to the die is extruded into a film state, and a film can be obtained by appropriately cooling and solidifying the product using a cooling roll or the like.

### (First laminated body)

In a laminated body according to a first embodiment of this disclosure (hereinafter may be referred to as "first laminated body"), the film described above, and a rubber layer in which a proportion of a diene-based rubber in a rubber component is 50 % by mass or more are laminated. Because this laminated body uses the film described above, it has better durability than a laminated body without the film.

Examples of the diene-based rubber contained in the rubber layer include natural rubber (NR), isoprene rubber (IR), butadiene rubber (BR), styrene-butadiene rubber (SBR), acrylonitrile-butadiene rubber (NBR), and chloroprene rubber (CR). These diene-based rubbers may be used alone or in combination of two or more.

The proportion of the diene-based rubber in the rubber component contained in the rubber layer is required to be 50 % by mass or more. From the viewpoint of obtaining better adhesiveness, the content is preferably 70 % by mass or more, more preferably 90 % by mass or more, and still more preferably 100 % by mass.

The rubber layer may contain a resin component. However, in this case, the proportion of the resin component to the total of the rubber component and the resin component is less than 50 % by mass.

The first laminated body can be produced, for example, by contacting the film described above with an unvulcanized rubber layer and performing vulcanization. In this case, because the film and the rubber layer are co-crosslinked, the adhesiveness between them is increased, and the durability can be further improved.

The first laminated body can be used, for example, as an inner liner arranged as an air barrier layer on the inner surface of a tire.

### (Second laminated body)

In a laminated body according to a second embodiment of this disclosure (hereinafter may be referred to as "second laminated body"), the film described above, and a resin layer in which a proportion of a resin component to the total of a rubber component and a resin component is 50 % by mass or more are laminated. Because this laminated body uses the film described above, it has better durability than a laminated body without the film.

Examples of the resin component contained in the resin layer include cellulose-based resin (such as rayon-based resin), polyamide-based resin (such as nylon-based resin and aramid-based resin), acrylic-based resin (such as polymethyl methacrylate), polyester-based resin, polyolefin-based resin, polyvinyl alcohol-based resin, and silica-based resin. These resin components may be used alone or in combination of two or more. Examples of the polyolefin-based resin include polyethylene resin, polypropylene resin, and ethylene propylene resin. The polyethylene resin may be low-density polyethylene or high-density polyethylene.

In the resin layer, the proportion of the resin component to the total of the rubber component and the resin component is 50 % by mass or more. However, the proportion can be appropriately changed according to the purpose, and it may be, for example, 70 % by mass or more, 90 % by mass or more, or 100 % by mass (that is, contains no rubber component).

The second laminated body can be produced, for example, by contacting the film described above with the resin layer and heating them. In this case, because the crystalline portion of the film (and the resin layer) is melted, the adhesiveness between them is increased, and the durability can be further improved.

The film in the second laminated body preferably contains the same resin component as that contained in the resin layer. In this case, the adhesiveness between the film and the resin layer can be further improved.

### (First tire)

A tire according to a first embodiment of this disclosure (hereinafter may be referred to as "first tire") has grooves in a tread portion, where the film described above is arranged on at least part of the surface of the groove bottom and groove wall of the groove. Because the first tire uses the film described above in the tread portion, it can exhibit good crack resistance without deteriorating other tire performances (such as fuel efficiency and wear resistance). Further, the film used for the first tire is as thin as 300 µm or less in thickness, which can significantly suppress an increase in the weight of the tire.

The structures and compositions of members other than the film in the first tire, such as tread rubber in the tread portion (rubber that forms the base of the tread portion), a sidewall portion, and a bead portion are not particularly limited and can be appropriately selected according to the purpose.

The structure of the grooves in the tread portion of the first tire (such as the number, width, depth, and pitch of the grooves) is not particularly limited and can be appropriately selected according to the purpose.

In the first tire, the film may be arranged on at least part of the groove bottom and groove wall of the groove in the tread portion to improve the crack resistance. However, the film is preferably arranged on the entire surface of the groove bottom and groove wall of the groove. By arranging the film on the entire surface of the groove bottom and groove wall of the groove, the crack resistance can be further improved. Further, it is preferable to arrange the film on the entire surface of the tread portion including the tread surface. Even if the film is arranged on the tread surface of the tread portion, the film is thin enough, so that the crack resistance can be further improved without deteriorating other performances required of the tread. Moreover, such a tire in which the film is arranged on the entire surface including the tread surface of the tread portion also has the advantage of being relatively easy to produce.

In the first tire, the film, and the member (tread rubber) that contacts the film may be co-crosslinked.

From the viewpoint of maintaining better fuel efficiency, the thickness of the film used for the first tire is preferably 200 µm or less, more preferably 150 µm or less, and still more preferably 120 µm or less. From the viewpoint of production feasibility and the viewpoint of more reliably improving the crack resistance, the thickness of the film may be 10 µm or more, 30 µm or more, or 50 µm or more.

### (Method of producing first tire)

A method of producing a tire according to a first embodiment of this disclosure (hereinafter may be referred to as "method of producing the first tire") is a method of producing the first tire described above, including
a tread preparation process of preparing a raw tire in which the film described above is arranged on at least part of the surface of unvulcanized tread rubber, and
a tread vulcanization process of vulcanizing the raw tire described above using a vulcanization mold and forming grooves in a tread portion. According to the method of producing the first tire, the first tire described above can be easily produced.

In the method of producing the first tire, a film with a thickness of 300 µm or less containing the copolymer A is prepared or produced in advance. The method of preparing the film is as described above.

### <Tread preparation process>

In the tread preparation process, a raw tire in which the above-described film with a thickness of 300 µm or less is arranged on at least part of the surface of unvulcanized tread rubber is prepared. The unvulcanized tread rubber is not particularly limited, and the thickness, types and amounts of rubber components and various compounding agents, and the like can be appropriately selected depending on the purpose. However, the tread rubber preferably contains at least a diene-based rubber and a vulcanizing agent such as sulfur. In this case, the film and the tread rubber can be co-crosslinked in the subsequent tread vulcanization process.

In the tread preparation process, the film may be partially arranged on the surface of the tread rubber where the grooves are to be formed, may be arranged on the entire tread surface, or may be arranged on the entire surface of the tread rubber.

More specifically, the tread preparation process may include an operation of attaching an unvulcanized tread rubber to a raw tire case, and an operation of arranging the film on at least part of the surface of the attached tread rubber.

Alternatively, the tread preparation process may include an operation of laminating the film on at least part of the surface of the unvulcanized tread rubber, and an operation of attaching the unvulcanized tread rubber, on which the film has been laminated, to a raw tire case.

### <Tread vulcanization process>

In the subsequent tread vulcanization process, a vulcanization mold is used to vulcanize the raw tire and form grooves in the tread portion to obtain the tire described above. The grooves are formed on the surface of the tread rubber including the portions where the film is arranged. Because the film is prepared using the copolymer A, it will not break even when the grooves are formed. Vulcanization conditions can be appropriately selected according to conventional methods.

### (Second tire)

In a tire according to a second embodiment of this disclosure (hereinafter may be referred to as "second tire"), the film described above is arranged on at least part of the surface of a sidewall portion. Because the second tire uses the film described above in the sidewall portion, it can exhibit ozone resistance and crack resistance without deteriorating other tire performances. Further, the film used for the second tire is as thin as 300 µm or less in thickness, which can significantly suppress an increase in the weight of the tire.

The structures and compositions of members other than the film in the second tire, such as side rubber in the sidewall portion (rubber that forms the base of the sidewall portion), a tread portion, and a bead portion are not particularly limited and can be appropriately selected according to the purpose.

In the second tire, the film may be arranged on at least part of the surface of the sidewall portion to improve the ozone resistance and crack resistance. Especially from the viewpoint of effectively suppressing damage due to impact from curbs and the like, the film is preferably arranged on the surface of the sidewall portion that is exposed when the tire is mounted on a vehicle. Further, the film is preferably arranged on the entire surface of the sidewall portion. By arranging the film on the entire surface of the sidewall portion, the ozone resistance and crack resistance can be further improved. Moreover, such a tire in which the film is arranged on the entire surface of the sidewall portion also has the advantage of being relatively easy to produce.

In the second tire, the film, and the member (side rubber) that contacts the film may be co-crosslinked.

From the viewpoint of maintaining better fuel efficiency, the thickness of the film used for the second tire is preferably 200 µm or less, preferably 150 µm or less, more preferably 120 µm or less, and still more preferably 90 µm or less. From the viewpoint of production feasibility and the viewpoint of more reliably improving the ozone resistance and crack resistance, the thickness of the film may be 10 µm or more, 30 µm or more, or 50 µm or more.

### (Method of producing second tire)

A method of producing a tire according to a second embodiment of this disclosure (hereinafter may be referred to as "method of producing the second tire") includes
a side preparation process of preparing a raw tire in which the film described above is arranged on at least part of the surface of unvulcanized side rubber, and
a side vulcanization process of vulcanizing the raw tire described above using a vulcanization mold.
According to the method of producing the second tire, the second tire described above can be easily produced.

In the method of producing the second tire, a film with a thickness of 300 µm or less containing the copolymer A is prepared or produced in advance. The method of preparing the film is as described above.

### <Side preparation process>

In the side preparation process, a raw tire in which the above-described film with a thickness of 300 µm or less is arranged on at least part of the surface of unvulcanized side rubber is prepared. The unvulcanized side rubber is not particularly limited, and the thickness, types and amounts of rubber components and various compounding agents, and the like can be appropriately selected depending on the purpose. However, the side rubber preferably contains at least a diene-based rubber and a vulcanizing agent such as sulfur. In this case, the film and the side rubber can be co-crosslinked in the subsequent side vulcanization process.

In the side preparation process, the film may be arranged on a part of the surface of the side rubber or arranged on the entire surface of the side rubber.

More specifically, the side preparation process may include an operation of attaching an unvulcanized side rubber to a raw tire case, and an operation of arranging the film on at least part of the surface of the attached side rubber.

Alternatively, the side preparation process may include an operation of laminating the film on at least part of the surface of the unvulcanized side rubber, and an operation of attaching the unvulcanized side rubber, on which the film has been laminated, to a raw tire case.

### <Side vulcanization process>

In the subsequent side vulcanization process, a vulcanization mold is used to vulcanize the raw tire to obtain the tire described above. Vulcanization conditions can be appropriately selected according to conventional methods.

### EXAMPLES

The following describes this disclosure in more detail with reference to examples, but this disclosure is not limited to the following examples.

### (Preparation of copolymer A1)

A 2000 mL pressure-resistant stainless steel reactor was sufficiently dried, and 52 g of styrene and 762 g of toluene were added to the reactor.

In a glove box of a nitrogen atmosphere, 0.031 mmol of mono(bis(1,3-tert-butyldimethylsilyl)indenyl)bis(bis(dimethylsilyl)amide) gadolinium complex {1,3-[(t-Bu)Me₂Si]₂C₉H₅Gd[N(SiHMe₂)₂]₂} and 0.031 mmol of dimethylanilinium tetrakis(pentafluorophenyl)borate [Me₂NHPhB(C₆F₅)₄] were charged into a glass vessel, and 21 g of toluene was added to prepare a catalyst solution. This catalyst solution was added to the pressure-resistant stainless steel reactor and heated to 60 °C. Note that "t-Bu" means a tert-butyl group, "Me" means a methyl group, and "Ph" means a phenyl group.

Next, ethylene was charged into the pressure-resistant stainless steel reactor at a pressure of 1.0 MPa, and 108 g of a toluene solution containing 27 g of 1,3-butadiene was continuously added at a rate of 0.6 mL/min while performing copolymerization at 75 °C for a total of 9 hours.

Next, 1 ml of an isopropanol solution of 5 % by mass 2,2'-methylene-bis(4-ethyl-6-t-butylphenol) (NS-5) was added to the pressure-resistant stainless steel reactor to stop the reaction.

Next, separation was performed using a large amount of methanol and vacuum drying was performed at 50 °C to obtain a copolymer A1.

### (Preparation of copolymer A2)

A 2000 mL pressure-resistant stainless steel reactor was sufficiently dried, and 91 g of styrene and 379 g of toluene were added to the reactor.

In a glove box of a nitrogen atmosphere, 0.1 mmol of mono(bis(1,3-tert-butyldimethylsilyl)indenyl)bis(bis(dimethylsilyl)amide) gadolinium complex {1,3-[(t-Bu)Me₂Si]₂C₉H₅Gd[N(SiHMe₂)₂]₂}, 0.1 mmol of dimethylanilinium tetrakis(pentafluorophenyl)borate [Me₂NHPhB(C₆F₅)₄], and 0.3 mmol of triisobutylaluminum were charged into a glass vessel, and 63 mL of toluene was added to prepare a catalyst solution. This catalyst solution was added to the pressure-resistant stainless steel reactor and heated to 60 °C.

Next, ethylene was charged into the pressure-resistant stainless steel reactor at a pressure of 1 MPa to 1.5 MPa, and 280 g of a toluene solution containing 70 g of 1,3-butadiene was continuously added at a rate of 1.1 mL/min to 1.2 mL/min while performing copolymerization at 85 °C for a total of 4 hours.

Next, 1 ml of an isopropanol solution of 5 % by mass 2,2'-methylene-bis(4-ethyl-6-t-butylphenol) (NS-5) was added to the pressure-resistant stainless steel reactor to stop the reaction.

Next, separation was performed using a large amount of methanol and vacuum drying was performed at 50 °C to obtain a copolymer A2.

The obtained copolymer was subjected to the following measurements.

### (1) Weight-average molecular weight (Mw), number-average molecular weight (Mn), peak top molecular weight (Mp), and molecular weight distribution (Mw/Mn)

The polystyrene-equivalent weight-average molecular weight (Mw), number-average molecular weight (Mn), peak top molecular weight (Mp), and molecular weight distribution (Mw/Mn) of the copolymer were determined based on monodisperse polystyrene by gel permeation chromatography [GPC: HLC-8121GPC/HT manufactured by Tosoh Corporation, column: GMH_{HR}-H(S)HT manufactured by Tosoh Corporation × 2, detector: differential refractometer (RI)]. The measurement temperature was 40 °C. The results are listed in Table 1.

### (2) Proportion of 1,3-butadiene unit, ethylene unit, and styrene unit

The proportions (mol%) of 1,3-butadiene unit, ethylene unit, and styrene unit in the copolymer was determined from the integral ratio of each peak in the ¹H-NMR spectrum (100 °C, d-tetrachloroethane standard: 6 ppm). The results are listed in Table 1.

### (3) Confirmation of main chain structure

The ¹³C-NMR spectrum of the obtained copolymer was measured. No peak was observed at 10 ppm to 24 ppm in the obtained ¹³C-NMR spectrum chart. According to this, it was confirmed that the main chain of the synthesized copolymer consisted only of an acyclic structure.

### (4) Melting point

The melting point of the copolymer was measured according to JIS K 7121-1987 using a differential scanning calorimeter (DSC, "DSCQ2000" manufactured by TA Instruments Japan Inc.). Table 1 lists the results.

### (5) Degree of crystallinity

The crystalline melting energy of 100 % crystalline polyethylene and the melting peak energy of the obtained copolymer were measured, and the degree of crystallinity was calculated from the ratio of the energies of the polyethylene and the copolymer. The melting peak energy was measured with a differential scanning calorimeter (DSC, "DSCQ2000" manufactured by TA Instruments Japan Inc.). Table 1 lists the results.

**Table 1**

| | | Copolymer A1 | Copolymer A2 |
|---|---|---|---|
| Weight-average molecular weight (Mw) | ×10³ | 403 | 457 |
| Number-average molecular weight (Mn) | ×10³ | 156 | 184 |
| Peak top molecular weight (Mp) | ×10³ | 248 | 330 |
| Molecular weight distribution (Mw/Mn) | - | 2.6 | 2.5 |
| Proportion of 1,3-butadiene unit | mol% | 8 | 26 |
| Proportion of ethylene unit | mol% | 85 | 69 |
| Proportion of styrene unit | mol% | 7 | 5 |
| Melting point | °C | 49 | 80 |
| Degree of crystallinity | % | 13.1 | 16.4 |

### (Preparation of film)

In each example, the rubber components listed in Table 2 were used, and, if necessary, an age resistor A ("SUMILIZER GS" manufactured by SUMITOMO CHEMICAL COMPANY, LIMITED, a compound having two or more phenyl groups with a branched alkyl group represented by the formula (4)) and an age resistor B ("SUMILIZER GP" manufactured by SUMITOMO CHEMICAL COMPANY, LIMITED, a compound having two or more phenyl groups with a branched alkyl group represented by the formula (4)) were blended in the amounts listed in Table 2 and kneaded to prepare a rubber composition. In the preparation of the rubber composition using the copolymer A1 or the copolymer A2, at least no filler or cross-linking agent was used.

On the other hand, as conventional rubber composition, 30 parts by mass of natural rubber, 70 parts by mass of butadiene rubber, 50 parts by mass of FEF grade carbon black, a total of 5 parts by mass of vulcanization chemicals (sulfur, vulcanization accelerator, and vulcanization accelerator aid), 3 parts by mass of an age resistor, and appropriate amounts of other compounding agents such as oil and wax were blended and kneaded to prepare a rubber composition as a conventional example.

The rubber composition was heated and melted, and a film having the thickness listed in Table 2 was prepared by melt extrusion molding using a molding apparatus equipped with a T-die. In the conventional example, because it was difficult to prepare a sufficiently thin film, a film of 2000 µm was prepared.

The film thus obtained was evaluated as follows.

### <Handleability>

During the preparation of the film, the continuously extruded film was wound around a core so that the film was layered one on top of the other. Then, the wound film was stored at room temperature for 30 days. The film after storage was subjected to a peel test to measure the tack value. Table 2 lists the results. The smaller the value is, the higher the releasability between the films is, that is, the better the handleability is.

### <Tensile test>

A tensile test was performed at 25 °C on a test piece of the prepared film in accordance with JIS K 6251:2004, and the tensile stress at 50 %, 100 %, and 300 % elongation (M50, M100, and M300), elongation at break (EB), tensile strength at break (TB), and toughness (TF) were measured. The toughness (TF) was obtained from the integrated value of the SS curve (stress-strain curve). Table 2 lists the results. The higher each value is, the better the durability is.

**Table 2**

| | | | Comparative example 1 | Example 1 | Example 2 | Example 3 | Conventional example |
|---|---|---|---|---|---|---|---|
| Film | Rubber component | | Copolymer A1 | Copolymer A1 | Copolymer A1 | Copolymer A2 | Conventional rubber composition |
| | Age resistor A | Part by mass *1 | 0 | 0 | 2 | 2 | |
| | Age resistor B | Part by mass *1 | 0 | 0 | 2 | 2 | |
| | Thickness | µm | 2000 | 100 | 100 | 100 | 2000 |
| | Tack value | gf | 11.2 | 11.2 | 1.0 | 3.1 | about 400 |
| Tensile test | Tensile stress (M50) | MPa | 3.8 | 30.2 | 39.3 | 34.3 | 1.2 |
| | Tensile stress (M100) | MPa | 4.4 | 40.9 | 47.8 | 38.0 | 1.9 |
| | Tensile stress (M300) | MPa | 6.5 | 102 | 101 | 67.4 | 6.5 |
| | Elongation at break (EB) | % | 559 | 403 | 448 | 626 | 440 |
| | Tensile strength at break (TB) | MPa | 24.3 | 232 | 298 | 211 | 10.0 |
| | Toughness (TF) | - | 183 | 1316 | 1750 | 2060 | 87.6 |
| *1 Part by mass with respect to 100 parts by mass of rubber component | | | | | | | |

According to Table 2, it is understood that the films of Examples have sufficiently low tack values and thus are excellent in handleability. In particular, it is understood that the handleability can be further improved by blending a predetermined age resistor when preparing the film, according to Table 2. On the other hand, it is difficult to cleanly peel off the film of the conventional example prepared with conventional rubber composition after it is layered one on top of the other, and it is necessary to devise a good way to handle the film during storage and use.

According to the results of the tensile test listed in Table 2, it is understood that the films of Examples have good durability despite being extremely thin with a thickness of 300 µm or less. In particular, it is understood that the films of Examples have the same elongation at break (EB) as the film of Comparative Example 1, which has a thickness of 2000 µm, and the tensile stress at 50 %, 100 %, and 300 % elongation (M50, M100, and M300), tensile strength at break (TB), and toughness (TF) are significantly improved to an unpredictable extent.

### (Preparation of rubber sheet with film)

Next, we examined a rubber sheet with a film on the surface.

In Example 4, only the copolymer A1 was used as a rubber component, and 0.01 parts by mass of calcium stearate (manufactured by DAINICHI CHEMICAL INDUSTRY CO., LTD.) as a lubricant was blended and kneaded with 100 parts by mass of the rubber component to prepare a rubber composition.

In Examples 5 and 6, only the copolymer A1 or only the copolymer A2 was used as a rubber component, and 0.01 parts by mass of calcium stearate (manufactured by DAINICHI CHEMICAL INDUSTRY CO., LTD.) as a lubricant, 2 parts by mass of SUMILIZER GS (manufactured by SUMITOMO CHEMICAL COMPANY, LIMITED, a compound having two or more phenyl groups with a branched alkyl group) as an age resistor, and 2 parts by mass of SUMILIZER GP (manufactured by SUMITOMO CHEMICAL COMPANY, LIMITED, a compound having two or more phenyl groups with a branched alkyl group) as an age resistor were blended and kneaded with 100 parts by mass of the rubber component to prepare a rubber composition. That is, in the preparation of the rubber composition, at least no filler or cross-linking agent was used. This rubber composition was heated and melted, and a film having a thickness of 100 µm was prepared by melt extrusion molding using a molding apparatus equipped with a T-die.

On the other hand, a rubber sheet having a thickness of 2 mm was obtained by using a rubber composition obtained by blending a rubber component containing natural rubber and butadiene rubber with carbon black and vulcanizing chemicals. Next, the film was arranged on the surface of the rubber sheet, and vulcanization was performed at 160 °C for 15 minutes. After vulcanization, it was appropriately cooled to obtain a film-attached rubber sheet (Examples 4 and 5 used the copolymer A1, and Example 6 used the copolymer A2).

For comparison, a rubber sheet without a film (Comparative Example 2) was obtained in the same manner as described above, except that no film was arranged.

Test pieces (sheet test pieces) of the film-attached rubber sheets (Examples 4 to 6) and the film-less rubber sheet (Comparative Example 2) obtained as described above were evaluated as follows.

### <Flex cracking test>

The rubber sheets of Example 4 and Comparative Example 2 were used as test objects. According to the flex crack growth test of JIS K 6260, a DeMattia flex cracking tester was used to continuously apply a predetermined flex to each sheet test piece. Table 3 lists the crack length after applying an arbitrary number of times of flex.

**Table 3**

| | | Comparative example 2 | Example 4 |
|---|---|---|---|
| | | Without film | With film |
| | Times of flex | Crack length [mm] | |
| | 9,000 times | 0.00 | 0.00 |
| | 18,000 times | 0.00 | 0.00 |
| | 54,000 times | 0.00 | 0.00 |
| Flex cracking test | 153,000 times | 0.00 | 0.00 |
| | 585,000 times | 0.00 | 0.00 |
| | 1,860,000 times | 2.00 | 1.25 |
| | 2,290,000 times | 3.50 | 1.90 |
| | 3,150,000 times | 5.65 | 2.40 |
| | 3,580,000 times | 7.20 | 2.55 |
| | 4,450,000 times | 11.85 | 4.15 |
| | 5,690,000 times | 14.80 | 6.55 I |

### <Ozone resistance (ozone deterioration test)>

Each sheet test piece was subjected to a static ozone deterioration test for 72 hours at an ozone concentration of 50 pphm and a tensile strain of 40 %. When observing the surface of each sheet test piece after the test, cracks were not found in the sheet test pieces of Examples 4 to 6, whereas cracks were found in the sheet test piece of Comparative Example 2.

Further, each sheet test piece was subjected to a dynamic ozone deterioration test for 48 hours at an ozone concentration of 50 pphm and a tensile strain of 20 %. When observing the surface of each sheet test piece after the test, cracks were not found in the sheet test pieces of Examples 4 to 6, whereas cracks were found in the sheet test piece of Comparative Example 2.

According to the test results, it is understood that, by arranging a film that has a thickness of 300 µm or less and contains a copolymer having a conjugated diene unit, a non-conjugated olefin unit, and an aromatic vinyl unit, and having a proportion of a butylene unit of 0 mol%, on the surface of the rubber sheet, it is possible to significantly suppress the growth of cracks due to repeated flex and ozone deterioration. Therefore, it is considered that in a tire, the crack resistance can be improved by arranging the film on at least part of the surface of the groove bottom and groove wall of the tread portion. It is also considered that in a tire, the ozone resistance and crack resistance can be improved by arranging the film on at least part of the surface of the sidewall portion.

### <Tensile test>

Each sheet test piece was subjected to a tensile test at 25 °C in accordance with JIS K 6251:2004, and the tensile stress at 50 % and 300 % elongation (M50 and M300), elongation at break (EB), tensile strength at break (TB), and toughness (TF) were measured. The toughness (TF) was obtained from the integrated value of the SS curve (stress-strain curve). Each value of Examples 4 to 6 was indicated as an index with each value of Comparative Example 2 being 100. The results are listed in Tables 4 and 5 (for Examples 5 and 6, the results of elongation at break (EB), tensile strength at break (TB), and toughness (TF) are listed). The larger the index value is, the better the durability such as wear resistance and breaking resistance is.

### <Low loss property (fuel efficiency)>

The tan δ of each sheet test piece was measured using a spectrometer under conditions of room temperature, strain of 1 %, and frequency of 15 Hz. The tan δ of Examples 4 to 6 was indicated as an index with the reciprocal of the tan δ of Comparative Example 2 being 100. The results are listed in Tables 4 and 5. The larger the index value is, the better the low loss properties (fuel efficiency) are.

**Table 4**

| | | Comparative example 2 | Example 4 |
|---|---|---|---|
| Rubber sheet | | Without film | With film (Copolymer A1) (without age resistor) |
| Tensile stress (M50) | | 100 | 108 |
| Tensile stress (M300) | | 100 | 102 |
| Elongation at break (EB) | Index value | 100 | 109 |
| Tensile strength at break (TB) | | 100 | 115 |
| Toughness (TF) | | 100 | 124 |
| Low loss property (tanδ) | | 100 | 100 |

**Table 5**

| | | Comparative example 2 | Example 5 | Example 6 |
|---|---|---|---|---|
| Rubber sheet | | Without film | With film (Copolymer A1) (with age resistor) | With film (Copolymer A2) (with age resistor) |
| Elongation at break (EB) | Index value | 100 | 110 | 106 |
| Tensile strength at break (TB) | | 100 | 112 | 103 |
| Toughness (TF) | | 100 | 122 | 111 |
| Low loss property (tanδ) | | 100 | 100 | 98 |

According to Tables 4 and 5, it is understood that the rubber sheet having the film on its surface has the same level of fuel efficiency as the rubber sheet without the film but better durability than the rubber sheet without the film.

### INDUSTRIAL APPLICABILITY

According to this disclosure, it is possible to provide a thin film with good durability that is easy to handle during storage and use.

Further, according to this disclosure, it is possible to provide a laminated body with good durability using the film described above.

Further, according to this disclosure, it is possible to provide a method of producing a film with which the film described above can be produced.

Further, according to this disclosure, it is possible to provide a tire with good durability using the film described above.

Further, according to this disclosure, it is possible to provide a method of producing a tire with which the tire described above can be easily produced.

## Claims

1. A film being a rubber film comprising, as a rubber component, at least a copolymer having a conjugated diene unit, a non-conjugated olefin unit, and an aromatic vinyl unit, and having a proportion of a butylene unit of 0 mol%, wherein
the copolymer has a proportion of the conjugated diene unit of 5 mol% to 70 mol%, a proportion of the non-conjugated olefin unit of 25 mol% to 94 mol%, and a proportion of the aromatic vinyl unit of 1 mol% to 30 mol%,
a proportion of the copolymer in the rubber component is 50 % by mass or more,
a filler content is 15 parts by mass or less with respect to 100 parts by mass of the rubber component,
no cross-linking agent is contained, and
a thickness is 300 µm or less.

2. The film according to claim 1, further comprising a compound having two or more phenyl groups with a branched alkyl group as an age resistor.

3. The film according to claim 1 or 2, further comprising a resin component.

4. The film according to any one of claims 1 to 3, wherein the copolymer has a melting point of 30 °C to 130 °C as measured by a differential scanning calorimeter.

5. The film according to any one of claims 1 to 4, wherein the non-conjugated olefinic unit in the copolymer consists only of an ethylene unit.

6. The film according to any one of claims 1 to 5, wherein the aromatic vinyl unit in the copolymer comprises a styrene unit.

7. The film according to any one of claims 1 to 6, wherein the conjugated diene unit in the copolymer comprises either or both of a 1,3-butadiene unit and an isoprene unit.

8. The film according to any one of claims 1 to 7, which is used to adhere members of a rubber composition containing a diene-based rubber to each other.

9. The film according to any one of claims 1 to 7, which is used to adhere a member of a rubber composition containing a diene-based rubber to a member of a resin composition containing a resin component.

10. A laminated body, wherein the film according to any one of claims 1 to 7, and a rubber layer in which a proportion of a diene-based rubber in a rubber component is 50 % by mass or more are laminated.

11. A laminated body, wherein the film according to any one of claims 1 to 7, and a resin layer in which a proportion of a resin component to a total of a rubber component and a resin component is 50 % by mass or more are laminated.

12. A tire, which is a tire having grooves in a tread portion, wherein
the film according to any one of claims 1 to 7 is arranged on at least part of a surface of groove bottom and groove wall of the grooves.

13. A tire, wherein the film according to any one of claims 1 to 7 is arranged on at least part of a surface of a sidewall portion.

## Patentansprüche

1. Film, bei dem es sich um einen Gummifilm handelt, der als Gummikomponente mindestens ein Copolymer umfasst, das eine konjugierte Dieneinheit, eine nicht-konjugierte Olefineinheit und eine aromatische Vinyleinheit aufweist, sowie einen Anteil von Butyleneinheiten von 0 Mol-% aufweist, wobei
das Copolymer einen Anteil der konjugierten Dieneinheit von 5 Mol-% bis 70 Mol-%, einen Anteil der nicht-konjugierten Olefineinheit von 25 Mol-% bis 94 Mol-% und einen Anteil der aromatischen Vinyleinheit von 1 Mol-% bis 30 Mol-% aufweist,
ein Anteil des Copolymers in der Gummikomponente 50 % nach Masse oder mehr beträgt, ein Füllstoffgehalt 15 Massenteile oder weniger bezogen auf 100 Massenteile der Gummikomponente beträgt,
keine Vernetzungsmittel enthalten sind, und
eine Dicke 300 µm oder weniger beträgt.

2. Film nach Anspruch 1, weiter umfassend eine Verbindung, die zwei oder mehr Phenylgruppen mit einer verzweigten Alkylgruppe als Alterungsresistenz aufweist.

3. Film nach Anspruch 1 oder 2, weiter umfassend eine Harzkomponente.

4. Film nach einem der Ansprüche 1 bis 3, wobei das Copolymer einen Schmelzpunkt von 30 °C bis 130 °C aufweist, gemessen mit einem Differenzialscanningkalorimeter.

5. Film nach einem der Ansprüche 1 bis 4, wobei die nicht-konjugierte olefinische Einheit im Copolymer ausschließlich aus einer Ethyleneinheit besteht.

6. Film nach einem der Ansprüche 1 bis 5, wobei die aromatische Vinyleinheit im Copolymer eine Styroleinheit umfasst.

7. Film nach einem der Ansprüche 1 bis 6, wobei die konjugierte Dieneinheit im Copolymer entweder eine 1,3-Butadieneinheit oder eine Isopreneinheit oder beides umfasst.

8. Film nach einem der Ansprüche 1 bis 7, der dazu verwendet wird, Bestandteile einer Kautschukzusammensetzung, die einen Dienkautschuk enthalten, miteinander zu verbinden.

9. Film nach einem der Ansprüche 1 bis 7, der dazu verwendet wird, ein Bestandteil einer Kautschukzusammensetzung, der einen Dienkautschuk enthält, mit einem Bestandteil einer Harzzusammensetzung, der eine Harzkomponente enthält, zu verbinden.

10. Laminierter Körper, wobei der Film nach einem der Ansprüche 1 bis 7 und eine Gummischicht, in der der Anteil eines Dienkautschuks in einer Gummikomponente 50 % nach Masse oder mehr beträgt, laminiert werden.

11. Laminierter Körper, wobei der Film nach einem der Ansprüche 1 bis 7 und eine Harzschicht, in der der Anteil der Harzkomponente an der Gesamtmasse aus Gummikomponente und Harzkomponente 50 % nach Masse oder mehr beträgt, laminiert werden.

12. Reifen, bei dem es sich um einen Reifen handelt, der Rillen in einer Lauffläche aufweist, wobei
der Film nach einem der Ansprüche 1 bis 7 auf mindestens einem Teil einer Oberfläche des Rillenbodens und der Rillenwand der Rillen angeordnet ist.

13. Reifen, wobei der Film nach einem der Ansprüche 1 bis 7 auf mindestens einem Teil der Oberfläche eines Seitenwandabschnitts angeordnet ist.

## Revendications

1. Film qui est un film de caoutchouc comprenant, comme composant de caoutchouc, au moins un copolymère présentant une unité diène conjuguée, une unité oléfine non conjuguée et une unité vinyle aromatique, et présentant une proportion d'unité butylène de 0 % en mole, dans lequel
le copolymère présente une proportion de l'unité diène conjuguée de 5 % en mole à 70 % en mole, une proportion de l'unité oléfine non conjuguée de 25 % en mole à 94 % en mole, et une proportion de l'unité vinyle aromatique de 1 % en mole à 30 % en mole,
la proportion du copolymère dans le composant de caoutchouc est de 50 % en masse ou plus, la teneur en charge est de 15 parties en masse ou moins par rapport à 100 parties en masse du composant de caoutchouc,
aucun agent de réticulation n'est contenu, et
une épaisseur est de 300 µm ou moins.

2. Film selon la revendication 1, comprenant en outre un composé présentant deux groupes phényle ou plus avec un groupe alkyle ramifié comme agent de résistance au vieillissement.

3. Film selon la revendication 1 ou 2, comprenant en outre un composant de résine.

4. Film selon l'une quelconque des revendications 1 à 3, dans lequel le copolymère présente un point de fusion de 30 °C à 130 °C mesuré par un calorimètre à balayage différentiel.

5. Film selon l'une quelconque des revendications 1 à 4, dans lequel l'unité oléfinique non conjuguée du copolymère consiste uniquement en une unité éthylène.

6. Film selon l'une quelconque des revendications 1 à 5, dans lequel l'unité vinyle aromatique du copolymère comprend une unité styrène.

7. Film selon l'une quelconque des revendications 1 à 6, dans lequel l'unité diène conjuguée du copolymère comprend soit une unité 1,3-butadiène et une unité isoprène, soit les deux.

8. Film selon l'une quelconque des revendications 1 à 7, qui est utilisé pour coller entre eux les éléments d'une composition de caoutchouc contenant un caoutchouc à base de diène.

9. Film selon l'une quelconque des revendications 1 à 7, qui est utilisé pour coller un élément d'une composition de caoutchouc contenant un caoutchouc à base de diène à un élément d'une composition de résine contenant un composant de résine.

10. Corps stratifié, dans lequel le film selon l'une quelconque des revendications 1 à 7 et une couche de caoutchouc, dans laquelle la proportion d'un caoutchouc à base de diène dans un composant de caoutchouc est de 50 % par masse ou plus sont stratifiés.

11. Corps stratifié, dans lequel le film selon l'une quelconque des revendications 1 à 7 et une couche de résine, dans laquelle la proportion d'un composant de résine par rapport au total d'un composant de caoutchouc et d'un composant de résine est de 50 % par masse ou plus sont stratifiés.

12. Pneu qui est un pneu présentant des rainures dans sa bande de roulement, dans lequel
le film selon l'une quelconque des revendications 1 à 7 est agencé sur au moins une partie d'une surface du fond et de la paroi des rainures.

13. Pneu, dans lequel le film selon l'une quelconque des revendications 1 à 7 est agencé sur au moins une partie d'une surface d'une partie de paroi latérale.
